# EUROPÄISCHE PATENTANMELDUNG

(11) **EP 3 831 210 A1**
(43) Veröffentlichungstag der Anmeldung: **09.06.2021**
(21) Anmeldenummer: 19212772.8
(22) Anmeldetag: 02.12.2019
(51) Int. Cl.: A23C 9/142, A23C 9/144, A23C 21/00, A23J 1/20

(54) **SÜSSMOLKEPULVER MIT HOHEM LACTOSEGEHALT**

(71) Anmelder: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(57) **Zusammenfassung**

Vorgeschlagen wird ein Süßmolkepulver mit hohem Lactosegehalt, dadurch erhältlich oder erhalten, dass man:
(a) Quarkbruch vorlegt;
(b) den Quarkbruch unter Erhalt von Quark und Sauermolke denaturiert;
(c) die im Schritt (b) erhaltene Sauermolke abtrennt und einem Konzentrierungsschritt unterwirft;
(d) das im Schritt (c) erhaltene Konzentrat einer Elektrodialyse unterwirft;
(e) das im Schritt (d) erhaltene Diluat mit Süßmolke vermischt und
(f) die im Schritt (e) erhaltene Mischung von Wasser befreit.

## Beschreibung

### GEBIET DER ERFINDUNG

Die Erfindung befindet sich auf dem Gebiet des Molkereiwesens und betrifft ein Süßmolkepulver mit hohem Lactosegehalt, das auf Basis von Sauermolke aus dem Thermoquark-Verfahren erhalten wird.

### TECHNOLOGISCHER HINTERGRUND

Zur Herstellung von Quark oder Frischkäse geht man üblicherweise von Milch aus, die durch Zugabe von Lab oder durch bakterielle Bildung von Milchsäure ausgefälltes Milcheiweiß (Casein) dickgelegt wird. Die von den geronnenen Milchbestandteilen getrennte Flüssigkeit, die Molke, wird durch Auspressen und Filtrieren der Gallerte mehr oder minder gründlich entfernt, so dass Quark eine weiche bis krümelige Masse bildet. Erfolgt die Dicklegung mit Lab wird die so genannte Süßmolke erhalten, werden der Milch Milchsäurekulturen zugesetzt, entsteht überwiegend Sauermolke.

Während Süßmolke infolge ihres hohen Lactosegehaltes ein wertvolles Koppelprodukt darstellt, das problemlos weiterverarbeitet werden kann, ist Sauermolke wegen ihrer hohen Milchsäurekonzentration nur bedingt weiterzuverarbeiten. Sie dient häufig der Tierernährung und wird in einigen Fällen zur Gewinnung von Milchsäure genutzt. In Summe handelt es sich hierbei um ein eher unerwünschtes Abfallprodukt.

Etwa 90 % der Quarkherstellung erfolgt jedoch heute nach dem so genannten "Thermoquark-Verfahren. Dabei wird Quarkbruch erhitzt und sauer eingestellt , wodurch die ernährungsphysiologisch wertvollen Molkenproteine ausfallen, kovalent an Caseine gebunden und quantitativ zum Weichkäse hinzugefügt werden. Auf diese Weise lassen sich die Erträge gegenüber den konventionellen Verfahren um bis zu 10 % steigern. Auch die Wärmebehandlung der geronnenen Milch erhöht die Haltbarkeit des Endprodukts auf bis zu 30 Tage. Nachteilig ist jedoch, dass auch das Thermoquarkverfahren als Koppelprodukt statt Süßmolke eine praktisch proteinfreie Sauermolke liefert.

Bei einer Variante, dem so genannten "Tetra Pack Processing" wird von Magermilch ausgegangen, die zunächst auf 85 bis 95 °C erhitzt und dann mit Milchsäurekulturen versetzt wird. Nach der Dicklegung wird das entstandene Gel verrührt und mit Hilfe eines Wärmetauschers bei 56°C bis 60°C thermisiert, abgekühlt und bei einer Temperatur von etwa 39°C bis 44°C einem Quarkseparator zugeleitet. Auch bei diesem Verfahren fällt Sauermolke an.

### RELEVANTER STAND DER TECHNIK

Eine kurze Beschreibung des Thermoquark-Verfahrens findet sich beispielsweise bei Bruckmeier et al. "Kurzes Lehrbuch der Milchkunde und Milchhygiene", Thieme Verlag, Kap. 8, Seiten 105-106 (2007).

### AUFGBE DER ERFINDUNG

Die Aufgabe der vorliegenden Erfindung hat daher darin bestanden, die bei der thermischen Herstellung von Quark anfallende Sauermolke auf technisch möglichst einfache Weise in ein nährstoffreiches und wohlschmeckendes Wertprodukt umzuwandeln.

### BESCHREIBUNG DER ERFINDUNG

Ein erster Gegenstand der Erfindung betrifft Süßmolkepulver mit hohem Lactosegehalt, dadurch erhältlich oder erhalten, dass man:
(a) Quarkbruch vorlegt;
(b) den Quarkbruch unter Erhalt von Quark und Sauermolke denaturiert;
(c) die im Schritt (b) erhaltene Sauermolke abtrennt und einem Konzentrierungsschritt unterwirft;
(d) das im Schritt (c) erhaltene Konzentrat einer Elektrodialyse unterwirft;
(e) das im Schritt (d) erhaltene Diluat mit Süßmolke vermischt und
(f) die im Schritt (e) erhaltene Mischung von Wasser befreit.

Ein weiterer Gegenstand der Erfindung betrifft Verfahren zur Herstellung von Süßmolkepulver mit hohem Lactosegehalt, umfassend oder bestehend aus den folgenden Schritten:
(a) Bereitstellen von Quarkbruch;
(b) Denaturieren des Quarkbruchs unter Erhalt von Quark und Sauermolke;
(c) Abtrennen und Aufkonzentrieren der Sauermolke aus Schritt (b);
(d) Elektrodialyse des Konzentrates aus Schritt (c);
(e) Vermischen des Diluats aus Schritt (d) mit Sauermolke;
(f) Entwässern der Mischung aus Schritt (e).

Überraschenderweise wurde gefunden, dass sich Sauermolke als Abfallprodukt der Thermoquark-Herstellung durch Elektrodialyse von den unerwünschten Bestandteilen Milchsäure und Mineralien soweit befreien lässt, dass sich durch Zugabe von geringen Mengen Süßmolke und anschließender Entwässerung ein nährstoffreiches und wohlschmeckendes Pulver erhalten lässt, das reich an Lactose und Proteinen ist und sich daher problemlos als Nahrungsmittel, beispielsweise als Milchzuckerquelle einsetzen lässt.

Die nach dem erfindungsgemäßen Verfahren erhältlichen Pulver enthalten
- etwa 70 bis etwa 80 Gew.-% und insbesondere etwa 72 bis 78 Gew.- Lactose und
- etwa 8 bis etwa 20 Gew.-% und insbesondere etwa 10 bis etwa 18 Gew.-% Proteine.

Der Gehalt an organischen Säuren, speziell Milchsäure und Mineralien liegt in den Pulvern typisch jeweils bei maximal 5 Gew.-%, was bedeutet, dass deren Gehalt - bezogen auf die Trockenmasse der ursprünglich eingesetzten Sauermolke um mindestens 80 % vermindert worden ist,

### DENATURIERUNG

Das erfindungsgemäße Verfahren geht von Quarkbruch aus. Darunter versteht der Käsereifachmann das Material, welches aus der durch Zugabe von Lab und/oder Milchsäure dickgelegten Milch entsteht, nachdem sie zerteilt und gebrochen wurde, um die Molke abzutrennen.

Zur Denaturierung wird der Quarkbruch temperaturbehandelt. Dazu reichen Temperaturen von etwa 50 bis etwa 70 °C und Behandlungszeiten von 1 bis 5 Minuten aus. Da der Quarkbruch noch Milchsäure enthält, ist er gewöhnlich schon sauer eingestellt, vorzugsweise erfolgt die Denaturierung jedoch bei einem pH-Wert von etwa 3 bis etwa 5. Bei diesen Bedingungen heften sich die Molkenproteine an das Casein und wandern in den Quark. Zurück bleibt eine Sauermolke. Diese weist bei einer Trockenmasse von etwa 6 Gew.-% typisch 3,8 Gew.-% Lactose, 0,5 Gew.-% Proteine sowie 0,8 Gew.-% Mineralien auf und ist in dieser Zusammensetzung für die menschliche Ernährung im Wesentlichen ungeeignet, zumindest aber wegen des hohen Gehaltes an Milchsäure und Mineralien geschmacklich unzureichend.

### UMKEHROSMOSE

Die Abtrennung der Sauermolke vom Quark erfolgt in der Regel in Separatoren. Da die Sauermolke fast 95 Gew.-% Wasser enthält, macht die weitere Verarbeitung es erforderlich, eine Konzentrierung vorzunehmen. Dies kann beispielsweise durch Eindampfen in Rührkesseln erfolgen, vorzugsweise wird die Sauermolke jedoch auf eine Umkehrosmose-Einheit gegeben.

Die Umkehrosmose oder Reversosmose ist ein physikalisches Membranverfahren zur Konzentrierung von in Flüssigkeiten gelösten Stoffen, bei der mit Druck der natürliche Osmose-Prozess umgekehrt wird.

Das Verfahrensprinzip besteht darin, dass das Medium, in dem die Konzentration eines bestimmten Stoffes verringert werden soll, durch eine halbdurchlässige (semipermeable) Membran von dem Medium getrennt ist, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Typische Drücke für die Umkehrosmose liegen im Bereich von 3 bis 30 bar. Der Konzentrierungsfaktor - entsprechend der Menge an verbliebenem Wasser im Konzentrat und der Ausgangsmenge - kann dabei zwischen etwa 2 und etwa 20, vorzugsweise etwa 5 und etwa 15 und insbesondere 7 bis etwa 12 liegen.

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die "Verunreinigungsmoleküle" zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren, wie dies durch das Lösungs-Diffusions-Modell beschrieben wird: Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen.

### ELEKTRODIALYSE

Während das saure Permeat der Umkehrosmose verworfen oder an anderer Stelle weiterverarbeitet wird, wird das Retentat, das nun eine Trockenmasse von vorzugsweise etwa 22 bis 25 Gew.-% aufweist, einer Elektrodialyse zugeleitet. Dabei kann es vorteilhaft sein, den pH-Wert noch einmal abzusenken, um das Ausfallen von Niederschlägen zu verhindern.

Hierbei handelt es sich um einen durch Anlegen eines elektrischen Feldes getriebenen Membranprozess, in dem lonenaustauschermembranen in Kombination mit einer elektrischen Potentialdifferenz benutzt werden, um ionische Spezies von ungeladenen Lösungsmitteln oder Verunreinigungen durch Passieren von selektiven Membranen abzutrennen. Das nachfolgende Schema verdeutlicht den Prozess; dabei steht AM für Anionaustauschermembran und CM für Kationaustauschermembran:

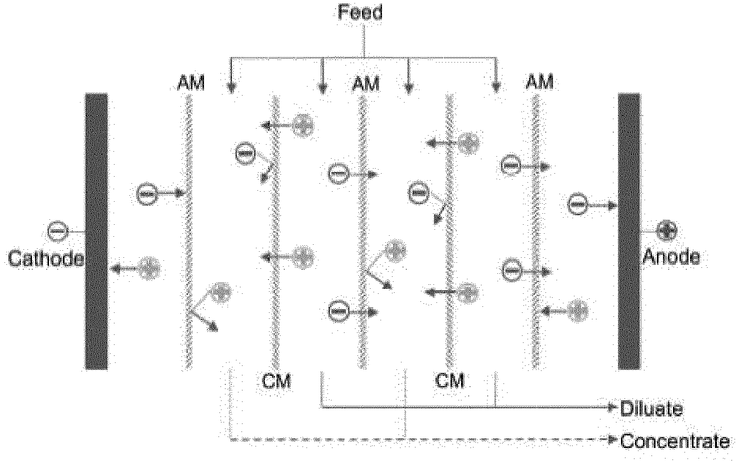

Dazu wird in einem Elektrodialyse-Separator der Raum zwischen zwei Elektroden durch einen Stapel aus einander abwechselnden Anionen- und Kationenaustauschermembranen getrennt. Jedes Paar lonenaustauschermembranen bildet eine separate "Zelle". In technischen Systemen bestehen diese Stapel aus mehr als zweihundert Membranpaaren. Wird eine elektrische Gleichspannung an die Elektroden angelegt, so wandern die Anionen zur Anode. Die Anionen können einfach die positiv geladenen Anionenaustauschermembranen passieren, aber sie werden jeweils an der nächstgelegenen negativ geladenen Kationenaustauschermembran gestoppt. Weil dasselbe (natürlich mit umgekehrten Vorzeichen) auch mit den Kationen geschieht, besteht der Nettoeffekt der Elektrodialyse in einer Anreicherung der Salze in den Zellen mit ungerader Nummer (Anionentauschermembran/Kationenaustauschermembran), während die Zellen mit gerader Nummer (Kationenaustauschermembran/Anionentauschermembran) an Salz verarmen. Die Lösungen mit erhöhter Salzkonzentration werden zum Konzentrat vereint, während die salzarmen Lösungen das Diluat bilden.

Üblicherweise wird die Elektrodialyse bei einer Temperatur im Bereich von etwa 35 bis etwa 50 °C durchgeführt.

Es empfiehlt sich, dass man das Diluat abschließend mit einem Kationenaustauscher ("Polisher") behandelt und insbesondere Restmengen an Natriumionen entfernt.

### VERMISCHEN

Das Diluat weist inzwischen einen hohen Lactosegehalt auf und wurde weitgehend von Milchsäure und Mineralien befreit. Der Proteingehalt liegt jedoch vergleichsweise niedrig. Aus diesem Grunde wird dem Diluat proteinreichere Süßmolke zugesetzt, wobei die Menge etwa 5 bis etwa 40 Gew.-% und vorzugsweise etwa 10 bis etwa 30 Gew.-% - bezogen auf eine Süßmolke mit 6 Gew.-% Trockenmasse - betragen kann.

### TROCKNUNG

Abschließend wird dem Mischprodukt das Wasser entzogen. Vorzugsweise wird das Mischprodukt vor dem Trocknungsprozess in einem Rührbehälter bzw. Kristallisationstank mit dem Ziel vorgekühlt, die Lactose auszukristallisieren und so das Trocknen und die Lagerstabilität zu verbessern. Gegebenenfalls kann auch noch eine so genannte Flashkühlung oder Entspannungskühlung vorgeschaltet werden.

Vorzugsweise kommt dabei die Sprühtrocknung zum Zuge, wobei die Temperatur im Einlass typischerweise etwa 180 bis etwa 260 °C und am Ausgang etwa 80 bis etwa 105 °C beträgt. Alternativ können die Produkte auch durch Gefriertrocknung entwässert werden. Der Restwassergehalt beträgt dabei maximal 5 Gew.-% und vorzugsweise etwa 1 bis etwa 4 Gew.-%.

Dem Produkt können vor, vorzugsweise aber nach dem Versprühen auch weitere Zusatzstoffe zugesetzt werden, wie beispielsweise Lactoferrin, Lecithine, Vitamine oder Lebensmittelemulgatoren [EP 1314367 A1**,** NESTLE] und dergleichen.

### GEWERBLICHE ANWENDBARKEIT

Ein weiterer Gegenstand der Erfindung betrifft die Verwendung des erfindungsgemäßen Süßmolkepulvers als Nahrungsmittel, insbesondere als Lactosequelle.

### BEISPIEL 1

### Herstellung eines Süßmolkepulvers

1000 kg Quarkbruch wurden bei 60 °C und pH = 4,4 5 Minuten gerührt und die resultierende Masse auf einen Separator gegeben. Die abgetrennte Sauermolke besaß eine Trockenmasse von 5,6 Gew.-%. Davon entfielen 3,8 Gew.-% auf Lactose, 0,5 Gew.-% auf Proteine und ferner 0,5 Gew.-% auf Milchsäure und 0,8 Gew.-% auf Mineralien. Die Sauermolke wurde auf eine Umkehrosmose-Einheit aufgegeben und mit dem Konzentrierungsfaktor 4 entwässert. Das saure Permeat wurde verworfen, das Retentat mit einer Trockenmasse von nun 24 Gew.-% einer Elektrodialyse zugeführt. Bei 42 °C wurde ein Diluat erhalten, das bezogen auf die Ausgangs-Sauermolke 90 Gew.-% weniger Mineralien und 80 Gew.-% weniger Milchsäure enthielt. Dem Diluat wurden dann 20 Gew.-% einer Sauermolke mit einer Trockenmasse von 6 Gew.-% (4,7 Gew.-% Lactose, 0,8 Gew.-% Proteine, 0,1 Gew.-% Milchsäure, 0,6 Gew.-% Mineralien, 0,2 Gew.-% Fette) zugegeben. Die Mischung wurde zunächst in einem Kristallisationstank vorgekühlt, wobei die enthaltene Lactose im Wesentlichen bereits auskristallisierte. Dann wurde das gekühlte Produkt auf einem Sprühturm bei 220 °C aufgegeben und bis auf einen Restwassergehalt von 0,8 Gew.-% getrocknet. Es wurde ein weißes lockeres Pulver erhalten, welches 75 Gew.-% Lactose und 12.-% Gew.-% Proteine aufwies.

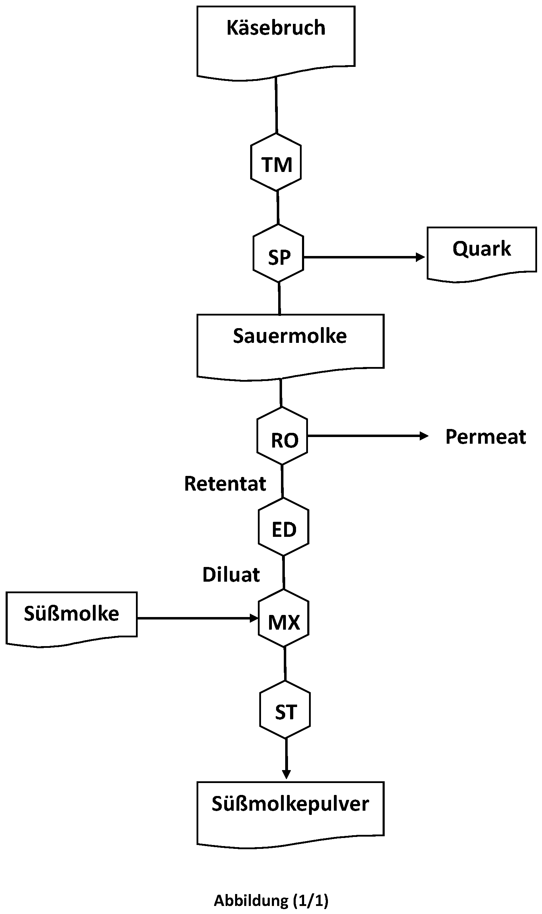

Die Erfindung wird durch ein beispielhaftes Fließschema (**Abbildung 1**) näher erläutert, ohne darauf eingeschränkt zu sein. Es bedeuten:
- TP: = Temperaturbehandlung/Denaturierung
- SP: = Separation
- RO: = Umkehrosmose
- ED: = Elektrodialyse
- MX: = Vermischung
- ST: = Sprühtrocknung

## Patentansprüche

1. Süßmolkepulver mit hohem Lactosegehalt, dadurch erhältlich oder erhalten, dass man:
(a) Quarkbruch vorlegt;
(b) den Quarkbruch unter Erhalt von Quark und Sauermolke denaturiert;
(c) die im Schritt (b) erhaltene Sauermolke abtrennt und einem Konzentrierungsschritt unterwirft;
(d) das im Schritt (c) erhaltene Konzentrat einer Elektrodialyse unterwirft;
(e) das im Schritt (d) erhaltene Diluat mit Süßmolke vermischt und
(f) die im Schritt (e) erhaltene Mischung von Wasser befreit.

2. Süßmolkepulver nach Anspruch 1, **dadurch gekennzeichnet, dass** es etwa 70 bis etwa 80 Gew.-% Lactose enthält.

3. Süßmolkepulver nach den Ansprüchen 1 und/oder 2, **dadurch gekennzeichnet, dass** es etwa 8 bis etwa 20 Gew.-% Proteine enthält.

4. Verfahren zur Herstellung von Süßmolkepulver mit hohem Lactosegehalt, umfassend oder bestehend aus den folgenden Schritten:
(a) Bereitstellen von Quarkbruch;
(b) Denaturieren des Quarkbruchs unter Erhalt von Quark und Sauermolke;
(c) Abtrennen und Aufkonzentrieren der Sauermolke aus Schritt (b);
(d) Elektrodialyse des Konzentrates aus Schritt (c);
(e) Vermischen des Diluats aus Schritt (d) mit Sauermolke;
(f) Entwässern der Mischung aus Schritt (e).

5. Verfahren nach Anspruch 4, **dadurch gekennzeichnet, dass** man den Quarkbruch zur Denaturierung auf eine Temperatur von etwa 50 bis etwa 70°C erhitzt.

6. Verfahren nach den Ansprüchen 4 und/oder 5, **dadurch gekennzeichnet, dass** man den Quarkbruch zur Denaturierung auf einen pH-Wert von etwa 3 bis etwa 5 einstellt.

7. Verfahren nach mindestens einem der Ansprüche 4 bis 6, **dadurch gekennzeichnet, dass** man die Sauermolke zur Konzentrierung einer Umkehrosmose unterwirft.

8. Verfahren nach Anspruch 7, **dadurch gekennzeichnet, dass** man die Umkehrosmose mit einem Konzentrierungsfaktor von etwa 2 bis etwa 20 durchführt.

9. Verfahren nach mindestens einem der Ansprüche 4 bis 8, **dadurch gekennzeichnet, dass** man dem Diluat etwa 5 bis etwa 40 Gew.-% Süßmolke mit zumischt.

10. Verfahren nach mindestens einem der Ansprüche 4 bis 9, **dadurch gekennzeichnet, dass** man das Mischprodukt durch Sprühtrocknung oder Gefriertrocknung entwässert.

11. Verfahren nach mindestens einem der Ansprüche 4 bis 10, **dadurch gekennzeichnet, dass** man das Mischprodukt bis auf einen Restwassergehalt von maximal 5 Gew.-% entwässert.

12. Verfahren nach mindestens einem der Ansprüche 4 bis 11, **dadurch gekennzeichnet, dass** man ein Pulver herstellt, das etwa 70 bis etwa 80 Gew.-% Proteine enthält.

13. Verfahren nach mindestens einem der Ansprüche 4 bis 12, **dadurch gekennzeichnet, dass** man ein Pulver herstellt, das etwa 8 bis etwa 20 Gew.-% Lactose enthält.

14. Verfahren nach mindestens einem der Ansprüche 4 bis 13, **dadurch gekennzeichnet, dass** man ein Pulver herstellt, das gegenüber der zur Herstellung verwendeten Sauermolke mindestens 80 Gew.-% weniger organische Säuren und Mineralien aufweist.

15. Verwendung des Süßmolkepulvers nach Anspruch 1 oder des Produktes nach dem Verfahren nach Anspruch 4 als Nahrungsmittel.
